# EUROPÄISCHE PATENTANMELDUNG

(11) **EP 2 605 368 A2**
(43) Veröffentlichungstag der Anmeldung: **19.06.2013**
(21) Anmeldenummer: 12194001.9
(22) Anmeldetag: 23.11.2012
(51) Int. Cl.: H02K 1/14, H02K 15/12

(54) **Stator für einen Elektromotor sowie Herstellungsverfahren hierfür**

(30) Priorität: 14.12.2011 DE 102011088529
(71) Anmelder: Metabowerke GmbH, 72622 Nürtingen (DE)
(72) Erfinder: Schmohl, Michael, 72119 Ammerbuch (DE); Ebner, Felix, 73033 Göppingen (DE); Flöte, Enrico, 72636 Frickenhausen-Linsenhofen (DE)
(74) Vertreter: Markfort, Iris-Anne Lucie

(57) **Zusammenfassung**

Die vorliegende Erfindung betrifft einen Stator (10) für einen Elektromotor, wobei der Stator (10) einen Statorkörper mit wenigstens zwei in einem Querschnitt betrachtet segmentförmigen Teilen (12) umfasst, die über Verbindungsstellen (18) miteinander verbindbar sind, wobei jedes Statorsegment (12) wenigstens zwei Verbindungsstellen (18) aufweist. Erfindungsgemäß sind die Statorsegmente (12) im verbundenen Zustand im Bereich der Verbindungsstellen (18) stoffschlüssig miteinander verbunden, wobei der verbundene Statorkörper eine Beschichtung mit Träufelharz umfasst.

## Beschreibung

Die vorliegende Erfindung betrifft einen Stator für einen Elektromotor sowie ein Verfahren zur Herstellung eines solchen Stators.

Statoren werden in elektrischen Antrieben bzw. Elektromotoren eingesetzt, die neben dem Stator auch einen hierzu relativ bewegbaren Rotor umfassen. Eine übliche Anwendung solcher elektrischer Antriebe findet sich bei Haushaltsgeräten und Elektrowerkzeugmaschinen.

Ein Stator mit einem entsprechenden Rotor weist in der Regel einen Statorkörper mit einer geschlossenen Statorwand und paarweise daran angeordnete Polhörner bzw. Polspitzen auf. So sind an einem zweipoligen Stator beispielsweise vier Polhörner vorgesehen, die zu der Innenwand des Statorkörpers beabstandet an dieser angeordnet sind. Innerhalb dieser Polhörner ist der Rotor des elektrischen Antriebs angeordnet, welcher sich um eine Drehachse innerhalb des Stators relativ zu diesem rotatorisch bewegt. Der Statorkörper, welcher wie der Rotor üblicherweise aus eisenhaltigen Werkstoff (Eisen) hergestellt ist, weist einen Spulenraum auf, der eine Anzahl von Spulennuten, bei einem zweipoligen Stator vier Spulennuten, umfasst, die von den jeweiligen Polhörnern und der Statorwand begrenzt werden. In diese Spulennuten wird üblicherweise ein aus Kupfer bestehender Draht bzw. werden aus einem solchen gefertigte Feldspulen eingelegt.

Aufgrund des Aufbaus des Elektromotors wird der maximale Außendurchmesser des Rotors im Wesentlichen durch den Abstand der Polhörner voneinander bestimmt, während der Außendurchmesser des Stators die Baugröße des Elektromotors vorgibt.

Bei Elektrowerkzeugmaschinen, bei denen der Elektromotor in einem Gehäuseteil im Griffbereich des Anwenders angeordnet ist, wie zum Beispiel bei Winkelschleifern, Geradschleifern oder Polierern, kommt dem Durchmesser des Elektromotors eine besondere Bedeutung zu, da er einen direkten Einfluss auf den Griffdurchmesser und damit auf den Umfang des Griffteils hat. Gerade bei solchen Elektrowerkzeugmaschinen sollte der Umfang des Gehäuseteils, das den Handgriff bildet (das sogenannte Fadenmaß), für eine möglichst komfortable Handhabung der Elektrowerkzeugmaschine ein gewisses Maß nicht überschreiten. Aus diesem Grund ist es seit langem eine Aufgabe im Zusammenhang mit derartigen Elektrowerkzeugmaschinen, das Fadenmaß zu reduzieren. Gleichzeitig beeinflusst jedoch der maximale Außendurchmesser des Rotors maßgeblich die Leistung des Elektromotors, da dieser dem maximalen Hebelarm des Rotors entspricht und somit die Größe des abgegebenen Drehmoments des Elektromotors mitbestimmt.

Eine entscheidende Anforderung, die seit Jahren an den elektrischen Antrieb von beispielsweise Elektrowerkzeugmaschinen gestellt wird, besteht darin, zunehmend höhere Leistungen bei gleichbleibender Gerätegröße oder bei einer gleichzeitigen Reduktion der Gerätegröße zu bieten.

Aus der Praxis ist es grundsätzlich bekannt, einen einteilig ausgebildeten Statorkörper eines zweipoligen Stators mit Hilfe von beispielsweise Nadelwickelmaschinen automatisiert mit Kupferdraht zu bewickeln. Ein Problem in diesem Zusammenhang ergibt sich jedoch dabei aus dem durch die geschlossene Statorwand begrenzten Raum, welcher die Zugänglichkeit des Spulenraums für die Nadelwickelmaschine bestimmt. So kann nur eine bestimmte Mindestgröße eines Stators für einen Elektromotor bewickelt werden. Weiterhin dürfen die Polhörner ein bestimmtes Maß an Überdeckung des Rotoraußendurchmessers nicht überschreiten, da ansonsten eine Bewicklung mit Hilfe einer Nadelwickelmaschine nicht mehr möglich ist.

Eine weitere Möglichkeit zum Wickeln der Feldspulen von Statoren, insbesondere für kleine Elektromotoren, besteht darin, den Statorkörper für eine vereinfachte Bewicklung zu teilen und die beiden Statorhälften nach erfolgter Bewicklung zu einem Stator zusammenzufügen. So ist aus der EP 1 225 679 A1 bekannt, dass die Statorhälften nach durchgeführter Wicklung über eine an den Hälften vorgesehene Nut-Feder-Verbindung zusammengefügt werden. Diese umfasst an jeder Statorhälfte je eine längsverlaufende, querschnittlich schwalbenschwanzförmige Feder und eine dieser entsprechende längslaufende hinterschnittene Nut. Die beiden Teile können entweder seitlich ineinander geschoben werden oder bei geeigneter Ausbildung zusammengeclipst werden. In beiden Fällen wird an den Verbindungsstellen ein Formschluss zwischen den Statorhälften hergestellt.

Eine ähnliche Lösung ist auch aus der DE 1 613 202 A1 bekannt, bei der an den Verbindungsstellen ein Vorsprung und eine diesen aufnehmende Nut vorgesehen sind, wobei deren Abmessungen so gehalten sind, dass die beiden zu verbindenden Statorteile durch Klemmung schon aneinander festhalten.

Üblicherweise wird der Statorkörper bzw. werden die Statorhälften durch Stanzpaketieren von identischen Blechlamellen zu einem Blechpaket hergestellt. Um eine Nut-Feder-Verbindung wie die vorstehend beschriebene vorzusehen, bei der die Statorhälften formschlüssig aneinander gehalten werden können, ist es notwendig, die Statorhälften mit einer hohen Passgenauigkeit zu fertigen. Weiterhin können die Blechlamellen der beiden Statorhälften aufgrund der geforderten Genauigkeit nicht aneinander anliegend aus dem Grundmaterial gestanzt werden, sondern müssen mit einem Abstand zueinander ausgestanzt werden, was bei der Herstellung zu mehr Material-Abfall führt. Somit entstehen bei der Herstellung höhere Material- und Werkzeugkosten.

Werden die beiden Statorhälften durch Zusammenclipsen miteinander verbunden, so können aufgrund der notwendigen elastischen Verformung beim Zusammenclipsen der beiden Statorhälften auftretende plastische Verformungen zurückbleiben, was zu unerwünschten Luftspalten führen kann. Zudem können die unerwünschten plastischen Restverformungen an dem Statorkörper dazu führen, dass die für den Formschluss notwendigen Toleranzen der Nut-Feder-Verbindung nicht mehr eingehalten sind, so dass die Verbindung sich unter Belastung wieder lösen kann.

Im Unterschied zu der aus EP 1 225 679 A1 oder DE 1 613 202 A1 bekannten Nut-Feder-Verbindung ist es ebenfalls bekannt, die Statorhälften einfach aneinander anzulegen und in einem separaten Motorgehäuse des Elektromotors aufzunehmen. Dabei ist es möglich, die Statorhälften mit einer geringeren Genauigkeit und unter Vermeidung von dem vorstehend erwähnten zusätzlichen Material-Abfall beim Stanzen aus dem Grundmaterial herzustellen. Allerdings können die in dem Motorgehäuse aufgenommenen Statorhälften sich weiterhin entlang der Gehäuselängsachse relativ zueinander bewegen (Wandern der Halbschalen innerhalb des Gehäuses), insbesondere bei Wasseraufnahme im Motorgehäuse. Da ein solches Wandern der Halbschalen die Einsatzfähigkeit und Langlebigkeit des Motors und des damit betriebenen Geräts maßgeblich beeinflusst, wird diese Lösung nur bei preiswerten Geräten eingesetzt.

Aus der US 5, 729, 072 A ist weiterhin eine Lösung bekannt, bei der die Statorsegmente im Bereich ihrer Verbindungsstellen ineinandergreifende Befestigungselemente aufweisen, die als Vorsprünge und korrespondierende Nuten ausgebildet sind und eine definierte Anlage der Statorsegmente aneinander gewährleisten sollen. Die auf diese Weise aneinander angelegten Statorteile werden in einem weiteren Schritt mittels Laserstrahlschweißens miteinander verbunden.

Abhängig davon, in welchen Geräten der Elektromotor später eingesetzt werden soll, kann ein Schutz des Spulendrahtes vor Abrasion sehr wichtig sein. Beispielsweise bei Polierern oder Schleifmaschinen, die bei der Bearbeitung von metallischen Oberflächen die Umgebungsluft mit feinen metallischen Partikeln anreichern, wird ein großer Anteil des erzeugten Metallstaubs mit der Kühlluft in den Elektromotor eingesogen und kann zur Abrasion insbesondere an dem Spulendraht führen.

Bei der in der Praxis bekannten Pulverbeschichtung wird der zusammengefügte Stator erwärmt und in eine Wanne oder ein Behältnis eingetaucht, die oder das mit dem pulverförmigen Beschichtungsmaterial befüllt ist. Aufgrund der Wärme des Stators schmilzt das Beschichtungsmaterial bei Kontakt mit der Oberfläche des Stators an dieser an und bleibt daran haften. Danach wird der Stator aus dem Pulverbad gezogen und nichthaftende Pulverreste werden an einer Abblasstation abgeblasen.

Nachteilig bei der bekannten Pulverbeschichtung ist jedoch, dass diese oftmals zu einer unregelmäßigen Beschichtung mit Löchern (Fehlstellen) führt. Wollte man eine vollkommen dichte Beschichtung (ohne Fehlstellen) erzeugen, müsste man den Stator stärker erwärmen, was jedoch einen temperaturbedingten Verzug des Statorkörpers zur Folge haben könnte. Weiterhin wird durch eine dickere (und damit dichtere) Beschichtungsschicht auch der Wärmeabtransport von den eingelegten Feldspulen und somit deren Kühlung mittels Kühlluft während des Betriebs des Motors erschwert, so dass bei einer dickeren Pulverbeschichtung des Stators mit einer kürzeren Lebensdauer und einer verminderten Leistungsfähigkeit des Elektromotors zu rechnen ist.

Eine Aufgabe der vorliegenden Erfindung besteht folglich darin, einerseits einen zuverlässigen Betrieb des Elektromotors zu gewährleisten und andererseits eine kostengünstige und einfache Herstellung des Stators ohne verminderte Leistungsfähigkeit des Elektromotors zu erreichen.

Diese Aufgabe wird erfindungsgemäß durch einen Stator für einen Elektromotor mit den Merkmalen des Anspruchs 1 gelöst. Demgemäß umfasst der Stator einen Statorkörper mit wenigstens zwei in einem Querschnitt betrachtet segmentförmigen Teilen, die über Verbindungsstellen miteinander verbindbar sind, wobei jedes Statorsegment wenigstens zwei Verbindungsstellen aufweist. Der Stator ist ferner dadurch gekennzeichnet, dass die Statorsegmente im verbundenen Zustand im Bereich der Verbindungsstellen stoffschlüssig miteinander verbunden sind und dass der Stator eine Beschichtung aus Träufelharz aufweist. Das Träufelharz wird durch Tauchimprägnierung aufgetragen, wobei die Tauchimprägnierung die aus der Praxis bekannte Pulverbeschichtung ersetzt. Die Tauchimprägnierung des Stators und die Beschichtung mit Träufelharz sind besonders vorteilhaft ist, da diese weniger Beschichtungsfehler zur Folge hat und somit eine verbesserte elektrische Isolation des Statorkörpers gewährleistet.

So werden die wenigstens zwei Statorsegmente eines Statorkörpers bei der vorliegenden Erfindung nicht durch Formschluss oder durch Einbringen in ein Motorgehäuse in Anlage miteinander gehalten, sondern durch einen Stoffschluss. Weiterhin wird die Verbindung der Statorsegmente durch die Beschichtung des Stators mit Träufelharz verbessert und so eine sichere Verbindung der Statorsegmente bereitgestellt.

Im Sinne der vorliegenden Beschreibung der Erfindung bezeichnet der Querschnitt eine Schnittebene, die senkrecht zu der Längsachse der Stators ist. Die Statorsegmente bilden zusammen einen im Wesentlichen im Querschnitt betrachtet kreisförmigen Statorkörper, wobei die wenigstens zwei Statorsegmente beispielsweise halbkreisförmig sein können. Je nach Gestaltung des Statorkörpers können jedoch auch mehr als zwei Statorsegmente vorgesehen sein, beispielsweise drei, vier, fünf oder mehr, die gemeinsam den Statorkörper bilden können. Diese können gleich große oder unterschiedlich große Statorsegmente umfassen, wobei unter Berücksichtigung der Herstellkosten mehrere Gleichteile vorteilhaft sind.

Definitionsgemäß umfasst eine stoffschlüssige Verbindung eine Verbindung, bei der die Verbindungspartner durch atomare oder molekulare Kräfte zusammengehalten werden. Stoffschlüssige Verbindung zeichnen sich zudem dadurch aus, dass sie nichtlösbare Verbindungen sind, die sich nur durch Zerstörung der Verbindungsmittel trennen lassen, wie beispielsweise Löten, Schweißen, Kleben oder Vulkanisieren.

Durch Vorsehen einer stoffschlüssigen Verbindung kann die Gefahr von plastischen Verformungen (durch das Zusammenclipsen) an dem Statorkörper verringert werden und dennoch eine sichere Verbindung der Statorsegmente miteinander erreicht werden.

Die Verbindungsstellen können sich ferner entlang einer Längsachse des Stators erstrecken und jedes Statorsegment kann eine erste Verbindungsstelle umfassen, welche zumindest abschnittsweise eine erste Kontur aufweist, sowie eine zweite Verbindungsstelle, welche zumindest abschnittsweise eine zweite zur ersten Kontur komplementäre Kontur aufweist, wobei die erste und die zwei Kontur in verbundenem Zustand eine Ausrichtung der verbundenen Statorsegmente zueinander ermöglichen.

Die erste und zweite Kontur können sich somit nur über einen oder mehrere einzelne Abschnitte oder über die gesamte Länge der jeweiligen Verbindungstelle erstrecken.

In einer Weiterbildung der Erfindung kann die erste Kontur einen längsverlaufenden Vorsprung und die zweite Kontur eine längsverlaufende Nut umfassen. Diese Ausprägung ermöglicht eine einfache Herstellung der Verbindungsstellen. Weiterhin kann der längsverlaufende Vorsprung der ersten Kontur wenigstens zwei Kanten umfasst, die in einem Winkel aufeinandertreffen, wobei der Winkel vorzugsweise in einem Bereich von 80 - 120 Winkelgrad liegt. Weiterhin kann es von Vorteil sein, wenn der Winkel stumpf ist und insbesondere in einem Bereich von 100 - 110 Winkelgrad liegt.

Weiterhin betrifft die vorliegende Erfindung einen Elektromotor umfassend einen Stator mit den vorstehenden Merkmalen und einen Rotor sowie ein Verfahren zur Herstellung eines Stators mit den vorstehenden Merkmalen. Das Herstellungsverfahren umfasst hierbei zumindest die Schritte: Herstellen von wenigstens zwei im Querschnitt betrachtet segmentförmigen Teilen des Statorkörpers; Einlegen von Draht in Form von wenigstens einer Feldspule zwischen Polhörner und Statorwand des jeweiligen Statorsegments; Verbinden der Statorsegmente zu einem Stator, wobei beim Verbinden der Statorsegmente letztere im Bereich von Verbindungsstellen aneinander angelegt werden und in einem weiteren Schritt die Statorsegmente im Bereich der Verbindungsstellen miteinander stoffschlüssig verbunden werden, beispielsweise mittels Schweißens, Klebens oder Lötens. Zusätzlich werden die Statorsegmente bei dem weiteren Verfahrensschritt des Beschichtens des Stators verbunden, wobei die Beschichtung durch Tauchimprägnieren mittels Träufelharz erfolgt.

So ist es also zum Beispiel möglich, zuerst die Statorsegmente beispielsweise durch Schweißpunkte oder dergleichen miteinander zu verbinden, damit eine Relativbewegung der Teile zueinander unterbunden werden kann. In einem nachfolgenden Verfahrensschritt kann dann der zusammengefügte Stator tauchimprägniert werden. Dabei ersetzt die Tauchimprägnierung die aus der Praxis bekannte Pulverbeschichtung, wobei die Tauchimprägnierung besonders vorteilhaft ist, da diese weniger Beschichtungsfehler zur Folge hat.

Bei der Tauchimprägnierung wird ein sogenanntes Träufelharz verwendet, welches sowohl unter Wärmeeinwirkung als auch unter UV-Licht härtet (dualhärtendes Harz), so dass eine große Wärmeeinbringung für eine möglichst fehlerfreie Beschichtung, wie sie bei der Pulverbeschichtung notwendig wäre, nicht vorgenommen werden muss. Stattdessen kann die Beschichtung durch einfaches Eintauchen eines im Bereich der Spule erwärmten Stators in das Harz erfolgen. Vorteilhaft ist hierbei die einfache und flächige Benetzung des Stators mit dem flüssigen Harz sowie dessen Aushärtung. So wird das Harz an der erwärmten Spule infolge der eingebrachten Wärme ausgehärtet, während das Aushärten in den übrigen Bereichen des Stators mittels UV-Licht erreicht wird, sobald der Stator wieder aus dem Harz aufgetaucht ist.

Ein weiterer Vorteil der Tauchimprägnierung mittels eines solchen Träufelharzes ist, dass dieses auch elektrisch isolierende Eigenschaften haben kann. Dadurch dass eine zumindest weitestgehend fehlerfreie Beschichtung erreicht wird, kann diese auch als Isolationsschicht dienen, welche im Stand der Technik üblicherweise durch Vorsehen einer zusätzlichen Lackschicht mit Isolierlack erreicht wird. Somit wird mit Hilfe der Tauchimprägnierung sowohl ein Abrasionsschutz als auch eine elektrische Isolation des Stators bereitgestellt.

Weiterhin kann grundsätzlich auch auf den separaten Schritt des stoffschlüssigen Verbindens der Statorsegmente vor der Tauchimprägnierung verzichtet werden und das aufgebrachte Harz als Beschichtungsmittel kann den Stoffschluss zwischen den zu verbindenden Statorsegmenten bewirken.

Weiterhin kann der Schritt Herstellen von wenigstens zwei im Querschnitt betrachtet segmentförmigen Teilen des Statorkörpers die Unterschritte Paketieren und Ausstanzen von Blechlamellen zu einem Statorsegment umfassen.

Bei dem Schritt Einlegen von Draht in Form von wenigstens einer Spule in den Spulenraum des jeweiligen Statorsegments kann ferner ein Isolierpapier vorgesehen werden, um die wenigstens eine Spule vor Abrasion zu schützen und elektrisch gegenüber dem Statorkörper sowie dem benachbarten Rotor zu isolieren. Somit kann der Verfahrensschritt die Unterschritte umfassen: Einlegen des Isolierpapiers in den Spulenraum in der Weise, dass das Isolierpapier aus der jeweiligen Spulennut heraus in eine Richtung senkrecht zu der Längsachse des Stators über das jeweilige Polhorn vorsteht, und Einlegen des Spulendrahts in den Spulenraum.

Wie im Stand der Technik gezeigt, kann der Spulenraum des Stators bei der vorliegenden Erfindung eine Anzahl von Spulennuten, vorzugweise vier Spulennuten, umfassen. Die Rotationsachse eines zugehörigen Rotors ist parallel zu der Längsachse des Stators, wobei im Rahmen der vorliegenden Beschreibung mit der Bezeichnung "Längsachse" auf die Mittellängsachse des Stators Bezug genommen wird, die in der Regel mit der Rotationsachse des Rotors zusammenfällt. Bevor der entsprechende Spulendraht in den Spulenraum des Stators eingelegt wird, kann das Isolierpapier, beispielsweise in Streifenform, in den Spulenraum in der Weise eingelegt werden, dass dieses aus der jeweiligen Spulennut heraus in eine Richtung senkrecht zu der Längsachse des Stators über das jeweilige Polhorn vorsteht. Dieser Überstand des Isolierpapiers über das jeweilige Polhorn hinaus, stellt ebenfalls einen Abrasionsschutz eines in einem weiteren Schritt eingelegten Spulendrahts in den Spulenraum dar. Weiterhin ermöglicht das überstehende Isolierpapier jedoch auch eine elektrische Isolation des Spulendrahts gegenüber dem innerhalb des Stators aufgenommenen Rotors.

So ist gemäß der Norm DIN EN 60745 ein elektrischer Sicherheitsabstand von einem aktiven Teil Eisen, wie dem Rotor oder dem Stator, zu einem elektrischen Draht, wie dem Spulendraht, von mindestens 2 mm Luftstrecke einzuhalten.

Für den Fall, dass der eingelegte Spulendraht über den verfügbaren Spulenraum hinaus vorsteht, d. h. bei einem Füllgrad von mehr als 100 % in den Spulennuten, kann in der Regel ein solcher Sicherheitsabstand nur durch eine separat anzubringende Bandage an einer vorgewickelten manuell einzulegenden Feldspule oder durch einen geringeren Außendurchmesser des Rotors erreicht werden. Letzteres hat eine geringere Leistung des elektrischen Antriebs zur Folge, während erstere Maßnahme kosten- und zeitintensiv ist und eine gegenüber dem automatisierten Wickelverfahren schlechtere Packungsdichte der Feldspule zur Folge hat.

Durch das Hochziehen des Isolierpapiers über die Polhörner hinaus kann mit Hilfe des erfindungsgemäßen Verfahrens jedoch die für die elektrische Isolation relevante Luftstrecke vergrößert werden, so dass der geforderte elektrische Sicherheitsabstand gemäß DIN EN 60745 sowohl bezüglich des Stators als auch bezüglich des Rotors eingehalten werden kann.

In einer Weiterentwicklung der vorliegenden Erfindung kann das Isolierpapier in einem Bereich von wenigstens 2 mm, vorzugsweise in einem Bereich von 5 mm bis 15 mm, aus der jeweiligen Spulennut heraus über das jeweilige Polhorn vorstehen.

Bei einer bevorzugten Ausführungsform kann während des Einlegens des Spulendrahts in den Spulenraum der vorstehende Teil des Isolierpapiers nach radial innen gezogen werden, um das Einlegen des Spulendrahts nicht zu behindern. Dabei bezeichnet nach radial innen eine Richtung, die auf die Mittellängsachse des Stators bezogen ist, d. h. eine Richtung von dem Spulenraum weg. Auf diese Weise kann der Statorkörper wie üblich bewickelt werden, ohne dass das Risiko besteht, dass das Isolierpapier beim Wickelvorgang beispielsweise nach innen verknickt wird.

Das erfindungsgemäße Verfahren kann ferner vorsehen, dass in einem Verfahrensschritt das Isolierpapier zumindest abschnittsweise an dem Statorkörper und/oder an dem eingelegten Spulendraht fixiert wird. Zur Fixierung kann insbesondere ein Fixierungsmittel an dem Isolierpapier, dem Statorkörper und/oder dem Spulendraht angebracht sein.

Gemäß einer ersten Ausführungsform kann das Fixierungsmittel auf den eingelegten Spulendraht aufgebracht werden und das Isolierpapier in Anlage an dem Fixierungsmittel an dem eingelegten Spulendraht stoffschlüssig fixiert werden. Dabei ist es grundsätzlich möglich, das Fixierungsmittel noch vor dem Aufwickeln des Spulendrahts auf diesen aufzubringen oder alternativ dieses erst auf die fertig gestellte bzw. aufgewickelte Feldspule aufzubringen.

Alternativ oder zusätzlich kann das Isolierpapier selbst wenigstens teilweise mit dem Fixierungsmittel beschichtet sein. Auch hier sind beide Möglichkeiten denkbar, d. h., dass das Isolierpapier bereits vor dem Einlegen in den Spulenraum mit dem Fixierungsmittel beschichtet worden ist, oder dass das Fixierungsmittel erst nach dem Einlegen des Isolierpapiers in den Spulenraum auf dieses aufgetragen wird.

Grundsätzlich ist es sowohl denkbar, nur in einem bestimmten Bereich ein Fixierungsmittel aufzubringen als auch den gesamten Abschnitt der gewickelten Feldspule, des Spulendrahts, bzw. des Isolierpapiers mit Fixierungsmittel zu beschichten. Zudem ist es möglich, wenn sowohl das Isolierpapier als auch der Spulendraht mit einem Fixierungsmittel versehen sind, das gleiche Fixierungsmittel oder ein jeweils anderes Fixierungsmittel für die einzelnen zu verbindenden Teile zu verwenden.

Das zusätzliche Fixierungsmittel kann dabei einen Klebstoff, Träufelharz oder Backlack umfassen. Besonders bevorzugt ist jedoch eine Ausgestaltung mit Backlack oder Träufelharz, da in einem nachfolgenden Fertigungsschritt der Statorkörper bzw. Stator ebenfalls durch Verbacken mit einem Beschichtungsmittel, z.B. mit einer Pulverbeschichtung oder einer Tauchimprägnierung mit einem härtenden Harz (UV-härtend oder wärmehärtend) versehen werden kann, wobei das Beschichten des gesamten Statorkörpers bzw. Stators und das Fixieren des Isolierpapiers in einem Schritt erfolgen kann.

Weiterhin kann das Isolierpapier in gleicher Weise auch oder alternativ an dem Statorkörper angebracht werden. Dabei sieht eine vorteilhaft Ausgestaltung der Erfindung vor, dass das Isolierpapier zumindest abschnittsweise mit dem Fixierungsmittel beschichtet ist und durch Einlegen in die Spulennuten des zumindest im Bereich des Spulenraums erwärmten Statorkörpers in der Spulennut stoffschlüssig fixiert werden kann.

Die Erfindung wird nachfolgend unter Bezugnahme auf die beigefügten Figuren detaillierter beschrieben.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und/oder zu sinnvollen anderen Kombinationen zusammenfassen können.

Es zeigen schematisch:
- Figur 1: eine isometrische Ansicht eines zweipoligen Stators;
- Figur 2: einen Querschnitt senkrecht zu der Längsachse des Stators der Figur 1;
- Figur 3: eine Draufsicht auf eine Statorhälfte des Stators gemäß Figuren 1 und 2;
- Figur 4: eine Detailansicht einer Verbindungsstelle eines Stators gemäß Figuren 1 und 2;
- Figur 5a: eine Detailansicht einer Statorhälfte mit einem Temperatursensorelement in einer ersten Ausführungsform;
- Figur 5b: eine Detailansicht einer Statorhälfte mit einem Temperatursensorelement in einer zweiten Ausführungsform;
- Figur 6: eine Wickelschablone, welche bei einem Wickelvorgang eines erfindungsgemäßen Stators verwendet werden kann;
- Figur 7: in einer Ansicht von der Außenseite her eine in eine Statorhälfte eingesetzte Wickelschablone nach einem Wickelvorgang;
- Figur 8: in einer isometrischen Ansicht einen mit einer Beschichtung versehenen Stator; und
- Figur 9: eine Schnittdarstellung des in Figur 8 gezeigten Stators.

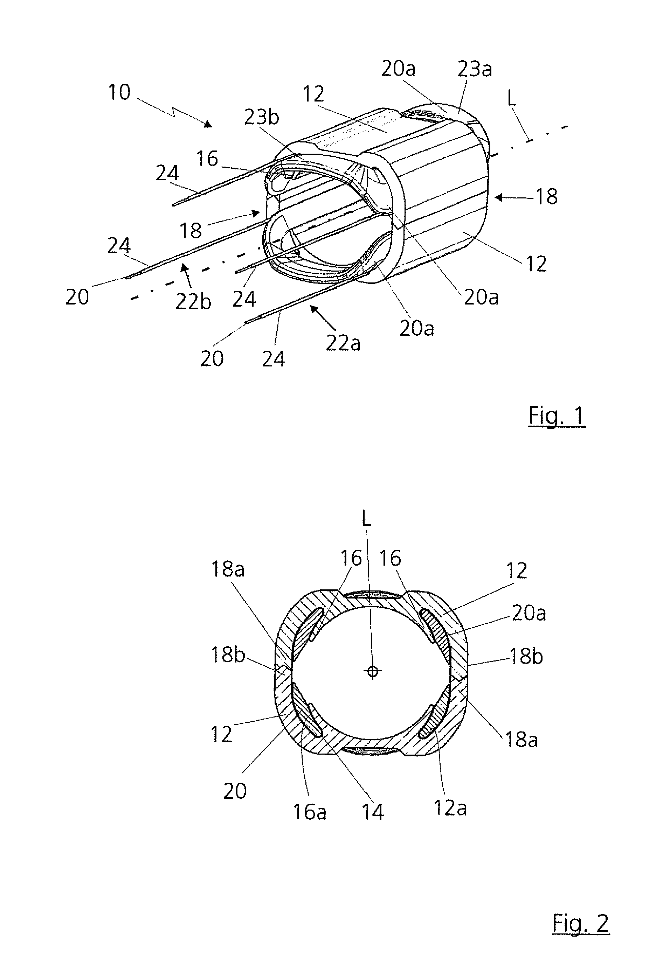

In der Figur 1 ist ein zweipoliger Stator eines elektrischen Antriebs gezeigt und allgemein mit dem Bezugszeichen 10 bezeichnet. Dieser zweipolige Stator umfasst einen Statorkörper, welcher im Bereich einer sich entlang einer Längsachse L des Stators erstreckenden Trennungsebene in zwei Statorsegmente bzw. Statorhälften 12 geteilt ist. Die beiden Statorhälften 12 sind dabei als identische Teile ausgebildet, was die Herstellung des Statorkörpers besonders einfach macht. In üblicher Weise ist der dargestellte Statorkörper des Stators 10 durch Stanzpaketieren von identischen Blechlamellen zu einem Blechpaket hergestellt.

Weiterhin umfasst jede der Statorhälften 12 zwei Polhörner bzw. Polspitzen 16 (vgl. auch Fig. 2), die sich von der Innenumfangsfläche 12a der jeweiligen Statorhälfte 12 nach innen erstrecken und somit den Innenraum des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Wie aus Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragt, um eine optimale Isolierung zu erreichen und einen Schutz vor leitfähigen Ablagerungen zu erhalten. Als Schlauchelemente kommen auch Glasgewebeschläuche in Betracht.

In anderen Ausführungsbeispielen könnte statt des Schlauchelements auch ein Hülsenelement vorgesehen sein.

Wie in Figur 2 deutlich zu erkennen ist, wird die erste Verbindungsstelle 18a der beiden Statorhälften 12 jeweils durch eine entlang der Längsachse L verlaufende dreieckförmige Nut 18a gebildet, während die zweite Verbindungsstelle 18b durch einen korrespondierenden entlang der Längsachse L verlaufenden dreieckförmigen Vorsprung 18b gebildet ist. Durch die spezielle Ausbildung der ersten und zweiten Verbindungsstelle 18a und 18b kann eine einfache Herstellung der Verbindungsstellen 18 ermöglicht werden.

Weiterhin wird durch die Ausprägung der ersten und zweiten Verbindungsstellen 18a und 18b eine Ausrichtung der Statorhälften 12 zueinander erreicht, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt gegenüber dem Stand der Technik führt.

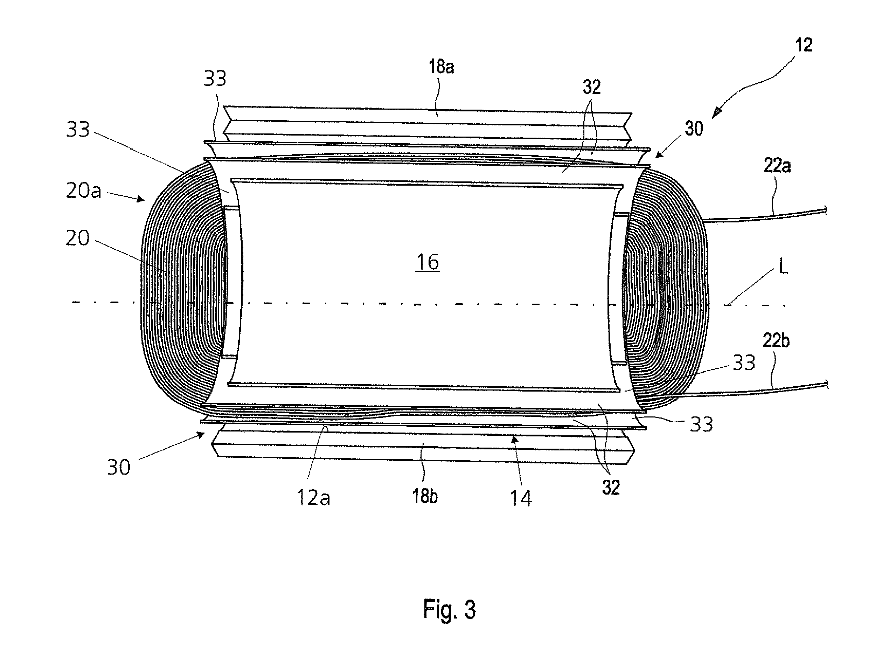

In Figur 2 ist ebenfalls deutlich gezeigt, dass die Statorinnenwand 12a und die radial äußere Wand 16a der Polhörner 16 eine Nut 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

In Figur 2 ist weiterhin gezeigt, dass der eingelegte Spulendraht 20 nicht wie in der Praxis üblich mit einem Füllgrad von weniger als 100 % in die Nut 14 eingelegt ist, sondern über die Nut 14 hinaus gewickelt ist. Darin ist eine Besonderheit der vorliegenden Erfindung zu sehen, da durch einen Füllgrad von mehr als 100 % eine erhöhte Leistung eines Elektromotors mit einem derart gewickelten Stator 10 gegenüber einem Elektromotor mit einem konventionell gewickelten Stator erreicht werden kann. Insbesondere ermöglicht es die in Figur 2 gezeigte Wicklungsform, insgesamt mehr Spulenwindungen in einem hohlzylindrischen Volumenelement (welches sich zwischen den Statorhälften und der Außenseite eines Ankers befindet) anzuordnen als nach dem Stand der Technik möglich. Bei gleichem beanspruchtem Bauraum kann so insgesamt mit der Spule 20a ein höherer magnetischer Fluss erzeugt werden und damit eine höhere Leistung des Elektromotors erreicht werden. Ebenso kann für eine gegebene Anzahl von Windungen die Spule 20a erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Da in dem über die Nut 14 hinausgehenden Bereich die mechanisch stabilisierende Wirkung der Polhörner 16 wegfällt, sind zusätzliche Maßnahmen erforderlich, um zu gewährleisten, dass die Spule ihre Form beibehält und sich die Wicklungen nicht voneinander lösen.

Hierzu ist eine zumindest teilweise stoffschlüssige Verbindung der Windungen der Spule 20a untereinander mindestens in Teilen des außerhalb der Nut 14 befindlichen Bereiches der Spule 20a vorteilhaft. Diese stoffschlüssige Verbindung kann beispielsweise unter Verwendung eines Backlackdrahtes verwirklicht werden. Unter einem Backlackdraht wird ein Spulendraht verstanden, der eine temperaturfeste Grundisolation und eine durch Erhitzen verklebende, oft auch dabei polymerisierende Deckschicht aufweist. Zusätzlich oder alternativ kann die stoffschlüssige Verbindung auch mittels eines Träufelharzes geschaffen werden, welches aufgrund der Kapillarwirkung der Zwischenräume zwischen den Windungen in der Spule 20a die Spule 20a nach einem Eintauchen praktisch vollständig durchdringt.

Wie in Figur 3 gezeigt ist, umfasst der zweipolige Stator 10 mit seinen beiden Statorhälften 12 nicht nur einen durch die Statorhälften 12 gebildeten Statorkörper, der mit Spulendraht 20 bewickelt ist, sondern auch Isolierpapier 30, das in die Nuten 14 eingelegt wird, ehe der Spulendraht 20 auf die jeweilige Statorhälfte 12 aufgewickelt wird.

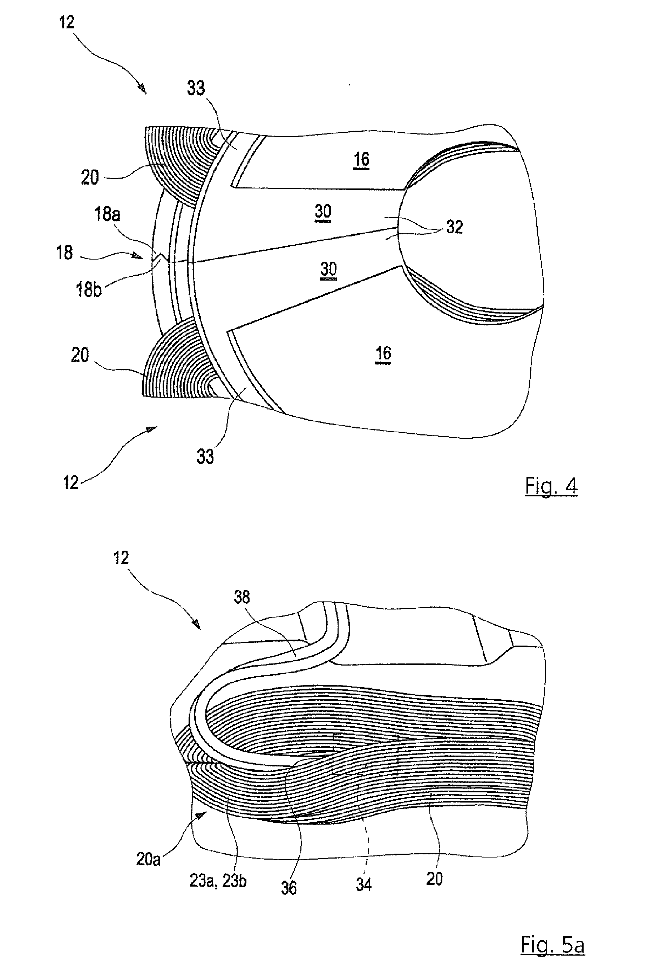

Das Isolierpapier 30 dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren. So ist gemäß der Norm DIN EN 60745 ein Mindestabstand von 2 mm Luftstrecke zwischen einem aktiven Teil, wie dem Statorkörper oder dem Rotor, und dem Spulendraht sicher zu stellen um eine elektrische Isolation zu gewährleisten. Diese wird bei dem vorstehend angesprochenen Füllgrad des Spulendrahts 20 über 100 % dadurch sichergestellt, dass das Isolierpapier 30 mit einem radialen Überstand 32 (vgl. auch Figur 4) über die jeweiligen Polhörner 16 hinaus vorgesehen ist.

Als radialer Überstand 32 wird der Teil des Isolierpapiers 30 verstanden, der bezogen auf die Längsachse L radial, d.h. in einer Richtung senkrecht zu der Längsachse L, über die Polhörner 16 übersteht.

Dabei kann der Überstand 32 des Isolierpapiers 30, wie in Figur 4 gezeigt, derart gewählt sein, dass zumindest die radial innenliegenden Abschnitte des überstehenden Isolierpapiers 32 dann, wenn die Statorhälften 12 zusammengesetzt sind, d. h. im Bereich ihrer Verbindungsstellen 18 aneinander anliegen, die Überstände 32 des Isolierpapiers 30 der beiden Statorhälften 12 ebenfalls aneinander anliegen bzw. sich überlappen. Zudem kann, wie in Figur 3 zu erkennen ist, auch ein (bezogen auf die Längsachse L des Stators 10) axialer Überstand 33 des Isolierpapiers 30 sinnvoll sein, um den elektrischen Sicherheitsabstand von 2 mm Luftstrecke zwischen Spulendraht und aktivem Eisen zu gewährleisten. Als axialer Überstand 33 wird der Teil des Isolierpapiers 30 verstanden, der bezogen auf die Längsachse L axial, d.h. in einer Richtung parallel zu der Längsachse L, über die Polhörner 16 übersteht.

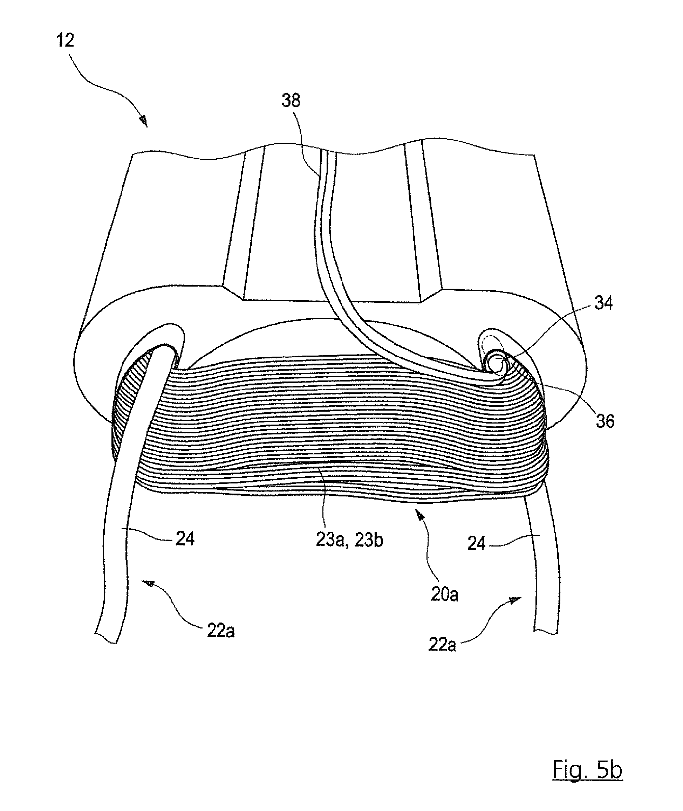

Wie aus Figur 5a ersichtlich, ist ein gestrichelt angedeutetes Temperatursensorelement 34 in einer Aussparung bzw. einem Hohlraum 36 in der Wicklungsstruktur der Spule 20a vorhanden, um die Temperatur der Spule 20a bzw. des Spulendrahts 20 während des Betriebs zu erfassen. Das Temperatursensorelement 34 ist wenigstens annähernd vollständig von der Spule 20a umgeben, so dass in Figur 5a lediglich die Anschlussleitungen 38 aus der Spule herausragen. Das Temperatursensorelement 34 kann nur in eine oder auch in beide Statorhälften 12 eingebracht werden. Wie aus Figur 5b ersichtlich, kann das Temperatursensorelement 34 alternativ auch in einem Hohlraum 36 in wenigstens einer der Spulennuten 14 untergebracht sein. Dazu kann das Temperatursensorelement 34 zwischen der Spule 20a einerseits und der Statorwand und/oder einem der Polhörner 16 andererseits angeordnet sein.

Eine weitere Besonderheit der vorliegenden Erfindung ist darin zu sehen, dass die beiden Drahtenden bzw. Drahtendabschnitte 22a, 22b, welche beim Wickelvorgang von der Spule 20a an den Statorhälften 12 entstehen, wie vorstehend erwähnt als Anschlussdrähte bzw. elektrische Anschlüsse des Elektromotors genutzt werden können. Hierfür werden die Drahtenden 22a, 22b in ausreichend großer Länge aus der Spule 20a herausgeführt, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. An den freien Enden der Drahtendabschnitte 22a, 22b können separate Anschlusselemente, beispielsweise in der Form einer Crimpkralle (nicht dargestellt) in der Weise befestigt werden, dass diese die isolierende Außenschicht (im dargestellten Beispiel eine isolierende Grundschicht sowie eine darauf aufgebrachte Backlackschicht) des Spulendrahts 20 durchdringen und eine elektrische Kontaktierung der Spule ermöglichen. Die Anschlusselemente (nicht dargestellt) können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

Nachfolgend wird der Herstellungsprozess eines zweipoligen Stators unter Bezugnahme auf die Figuren beschrieben:

Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

Um im Betrieb eine ausreichende elektrische Isolation gewährleisten und ausreichend große Abstände zwischen der Spule und aktiven Teilen des Elektromotors bereitstellen zu können, wird, bevor die Statorhälften 12 bewickelt werden, Isolierpapier 30 in die Nuten 14 der jeweiligen Statorhälften 12 eingelegt.

Um zu gewährleisten, dass das Isolierpapier 30 relativ zu der jeweiligen Statorhälfte 12, in deren Nut 14 das Isolierpapier 30 eingelegt wird, fixiert ist, können die Statorhälften 12 in einem vorgeschalteten Prozessschritt vor dem Einlegen des Isolierpapiers 30 in die zugehörigen Nuten 14 zumindest in dem Bereich der Nuten erwärmt werden, beispielsweise auf eine Temperatur von wenigstens 150° Celsius. Das Isolierpapier 30 ist auf derjenigen Seite, mit der es in Anlage an die erwärmte Nut 14 der Statorhälften 12 kommen soll, zumindest abschnittsweise mit einem Backlack beschichtet. Das eingelegte Isolierpapier 30 kann dann, sobald es in die zugehörige Nut 14 eingelegt ist, für einige Sekunden an die Nutinnenseiten angepresst werden. Dabei schmilzt die Backlackbeschichtung an dem Isolierpapier 30 an und verklebt dieses mit der Statorhälfte 12. Eine Fixierung des Isolierpapiers 30 bei dem nachfolgenden Prozessschritt des Bewickelns ist folglich nicht mehr notwendig.

Das eingelegte Isolierpapier 30 weist dabei, wie bereits vorstehend beschrieben, einen radialen Überstand 32 über die Polspitzen 16 der jeweiligen Statorhälften 12 hinaus auf. Dieser Überstand 32 kann während des nachfolgenden Wickelvorgangs zusätzlich nach radial innen gezogen werden, um während des Bewickelns sicherzustellen, dass das Isolierpapier 30 nicht durch den Spulendraht 20 geknickt wird.

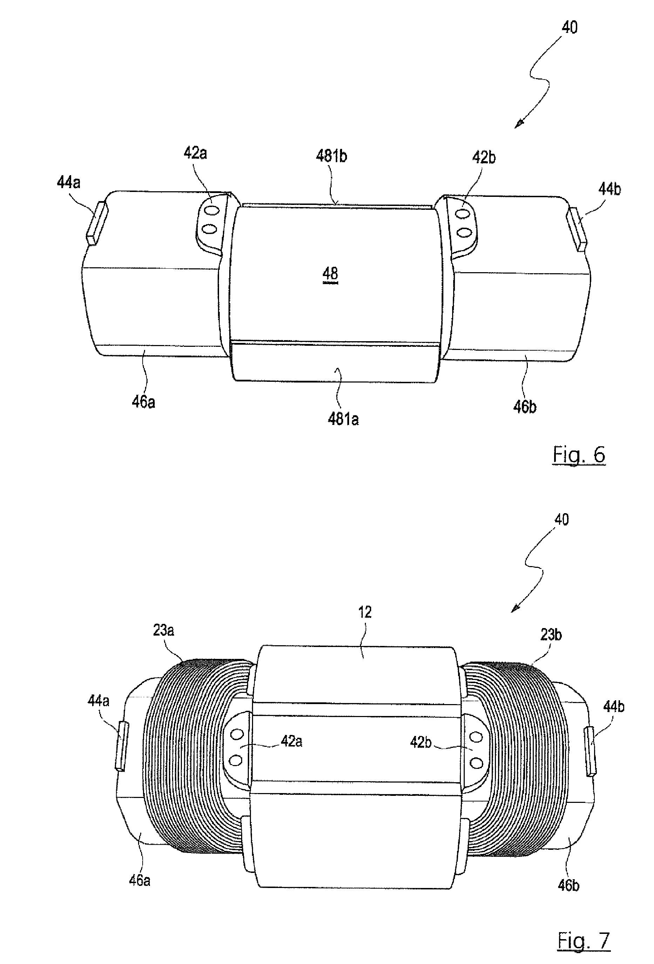

In einem weiteren Schritt wird jede der Statorhälften 12 automatisiert mit Hilfe eines Wickelarms mit dem Spulendraht 20 bewickelt. Um eine Bewicklung der Statorhälften 12 zu erreichen, bei der der Füllgrad der Spulennut 14 über 100 % liegt, kann eine wie in Fig. 6 dargestellte Wickelschablone 40 verwendet werden. Die Wickelschablone 40 zeigt dabei ein näherungsweise halbzylindrisches Mittelstück 48, an dessen Stirnseiten jeweils die beiden von diesem am Umfang etwas abgesetzten Schablonenenden 46a und 46b angeordnet sind. Dabei ist das Mittelstück 48 dazu vorgesehen, von der Innenseite her auf eine Statorhälfte 12 aufgesetzt zu werden, wobei es mittels der Schablonenenden 46a und 46b auf dieser in Axialrichtung zentriert wird. Das Mittelstück 48 zeigt dabei die Anlagenflächen 481a und 481b, welche bei eingesetzter Wickelschablone 40 über die Polhörner der Statorhälfte überstehen und so eine zusätzliche temporäre Nut schaffen, in welcher der Spulendraht 20 gewickelt werden kann, wobei er dort während und nach dem Wickelvorgang mittels der Wickelschablone 40 in dieser temporären Nut geführt und gehalten wird.

Ferner zeigt die in Fig. 6 dargestellte Wickelschablone 40 auf ihren Schablonenenden 46a und 46b jeweils einen äußeren Fortsatz 44a, 44b und einen inneren Fortsatz 42a, 42b. Zwischen den Fortsätzen 42a und 44a bzw. 42b und 44b kann beim Wickelvorgang der Spulendraht 20 ebenfalls geführt bzw. angeordnet werden, so dass sich über die Statorhälfte 12 hinausstehend ein Wickelkopf mit einer definierten Form ergibt. Im Unterschied zum Stand der Technik kann also durch die Verwendung der Wickelschablone 40 einerseits erreicht werden, dass auch Bereiche außerhalb der Nut 14 mit Spulendraht 20 gefüllt werden und andererseits auch, dass eine definierte Form eines Wickelkopfes geschaffen werden kann.

Fig. 7 zeigt in einer Ansicht von der Außenseite her die in der Statorhälfte 12 eingesetzte Wickelschablone 40 nach dem Wickelvorgang. Gut erkennbar ist die definierte Ausbildung der Wickelköpfe 23a, b, welche durch die Fortsätze 42a, 44a und 42b, 44b erreicht werden kann. Ansonsten entsprechen die in der Fig. 7 verwendeten Bezugszeichen den bereits in der Fig. 6 verwendeten.

Bevor diese Schablone wieder entnommen wird, um den Statorkörper weiteren Fertigungsschritten zuzuführen, wird die Spule 20a mindestens teilweise verbacken bzw. "angebacken". Aus diesem Grund wird bei dem vorliegenden Herstellungsprozess ein Backlackdraht als Spulendraht 20 verwendet, d.h. ein Kupferdraht mit einer temperaturfesten Grundisolation und einer zusätzlichen Backlack-Deckschicht, welche bei Temperaturen von etwa 150°C bis 200°C erweicht und aushärtet, so dass die einzelnen Spulenwindungen der Spule 20a von dem ausgehärteten Backlack zumindest für die nachfolgenden Handhabungsschritte während der Fertigung in einem Verbund miteinander gehalten werden. Um den Backlack entsprechend zu erwärmen, wird Strom in die Spule 20a eingeleitet, so dass diese sich infolge ihres elektrischen Widerstands auf die gewünschte Temperatur (etwa 150°C bis 200°C) erhitzt. Für eine vorläufige Stabilisierung der Spule 20a genügt ein Stromfluss von ca. 50A für einen Zeitraum für ca. 4s, wodurch die Taktzeiten der Fertigung gering gehalten werden können. In diesem Verfahrensschritt, in dem die einzelnen Drahtwindungen zu einer Spule 20a verbacken werden, kann auch der Überstand 32 des Isolierpapiers 30 an die Spule 20a angebacken werden. Dabei kann das Isolierpapier 30 hierfür ebenfalls eine Backlackbeschichtung zumindest im Bereich seines Überstands 32 auf der der Spule 20a zugewandten Seite aufweisen.

Alternativ ist es jedoch ebenfalls denkbar, das Isolierpapier direkt an der Backlackbeschichtung des Spulendrahtes oder mit Hilfe eines separat aufzubringenden Beschichtungsmittels an der Spule zu verbacken. Weiterhin ist auch denkbar, ein anderes Beschichtungsmittel bzw. eine andere Deckschicht als Backlack zur Fixierung der Spulenwindungen aneinander einzusetzen.

Ein nicht dargestelltes Platzhalterelement, insbesondere ein Stift oder dergleichen kann in den Bereich des Spulenraums in der Weise eingelegt werden, dass sich beim automatisierten Einlegen des Spulendrahts 20 in den Spulenraum der durch das Platzhalterelement begrenzte Hohlraum 36 in der Wicklungsstruktur der Spule 20a oder in wenigstens einer der Spulennuten 14 ergibt. Nach dem Entfernen des Platzhalterelements aus der Wicklungsstruktur der Spule 20a oder aus der wenigstens einen Spulennut 14 kann in den verbleibenden Hohlraum 36 das Temperatursensorelement 34 eingeführt werden.

Die Wickelschablone 40 ist beispielsweise derart ausgebildet, dass in einem Bereich der gewickelten Spule 20a die entsprechende Ausnehmung bzw. der Hohlraum 36 verbleibt, in den in einem weiteren Prozessschritt das Temperatursensorelement 34 in die gewickelte Spule 20a eingeführt werden kann. Alternativ kann das von der Wickelschablone separate Platzhalterelement verwendet werden. Das Temperatursensorelement 34 wird in dem wenigstens einen Hohlraum 36 der Spule 20a fixiert. Dies kann mittels des Fixiermittels für den Spulendraht 20 erfolgen. Alternativ ist es jedoch ebenfalls denkbar, das Temperatursensorelement 34 direkt an der Backlackbeschichtung des Spulendrahts 20 zu verbacken oder mit Hilfe eines zusätzlichen separat aufzubringenden Sensorfixiermittels an der Spule 20a zu fixieren. Dazu kann das Temperatursensorelement 34 wenigstens teilweise mit dem Sensorfixiermittel beschichtet werden. Das Platzhalterelement und damit auch der Hohlraum 36 kann im Bereich des Wickelkopfes 23a, b oder in einer der Spulennuten 14 zwischen der Spule 20a einerseits und der Statorwand und/oder einem der Polhörner 16 andererseits vorgesehen werden. Das zusätzliche Sensorfixiermittel kann z. B. Klebstoff, Träufelharz oder Backlack umfassen.

Darüber hinaus kann ein vorstehend genanntes Platzhalterelement in den Bereich des Spulenraums in der Weise eingelegt werden, dass sich beim automatisierten Einlegen des Spulendrahts 20 in den Spulenraum ein nicht dargestellter, durch das Platzhalterelement begrenzter, Hohlraum im Bereich der Endabschnitte 22a, 22b in der Wicklungsstruktur der Spule 20a ergibt. Nach dem Entfernen des Platzhalterelements aus der Wicklungsstruktur der Spule 20a kann der Schrumpfschlauch 24 auf das jeweilige Drahtende 22a, 22b aufgebracht und in den verbleibenden Hohlraum in der Wicklungsstruktur der Spule 20a eingeführt werden. Anschließend wird der Schrumpfschlauch 24 mittels eines Schlauchfixiermittels in der Wicklungsstruktur der Spule 20a fixiert. Das Schlauchfixiermittel kann Klebstoff oder Träufelharz, vorzugsweise ein dual härtendes Harz umfassen .

Schließlich können die Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Die beiden aneinander anliegenden Statorhälften 12 können in einem weiteren Schritt mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern auch als Statorfixiermittel zur stoffschlüssigen Verbindung der Statorhälften 12 miteinander. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Schlauchfixiermittel dienen bzw. als Sensorfixiermittel.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Das vorstehend beschriebene teilweise Verbacken bzw. Anbacken der Spulenwindungen kann durch die Kombination mit dem weiteren Prozessschritt des Tauchimprägnierens innerhalb eines Zeitfensters von etwa 3 Sekunden vorgenommen werden, da hierdurch die Windungen der Spule nur relativ zu einander in dem Maße gesichert werden müssen, dass die Wickelschablone entnommen werden kann. Die in einem weiteren Prozessschritt vorgenommene Tauchimprägnierung sichert die ausreichende Stabilität der Spule im Betrieb des elektrischen Antriebs. Wollte man die Spule nur durch Verbacken der Backlackbeschichtung des Spulendrahtes fixieren, wären höhere Backzeiten in der Wickelmaschine notwendig, was insgesamt die Taktzeit bei der Herstellung unvorteilhaft erhöhen würde.

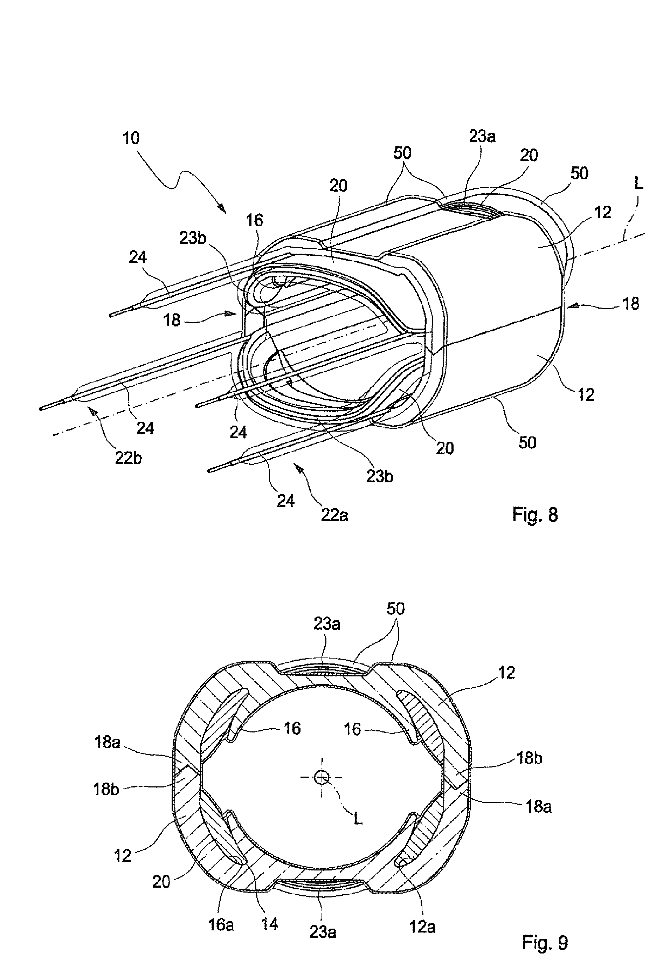

In den Figuren 8 und 9 ist ein Stator 10 gezeigt, welcher wie vorstehend beschrieben mittels einer Tauchimprägnierung beschichtet wurde. Grundsätzlich sind auch andere Beschichtungsverfahren zur Erzeugung des beschichteten Stators 10 wie bspw. Besprühen denkbar. Die in den Figuren 8 und 9 verwendeten Bezugszeichen entsprechen weitgehend den bereits in den Figuren 1 und 2 verwendeten.

Fig. 8 zeigt in einer isometrischen Ansicht einen Stator 10, bei welchem die Wickelköpfe 23a und 23b mit der gemeinsamen Beschichtung 50 versehen sind. Gut erkennbar in Fig. 8 ist, dass die gemeinsame Beschichtung 50 im vorliegend gezeigten Ausführungsbeispiel den Statorkörper an seiner Innen- und Außenseite sowie die Wickelköpfe 23a und 23b wie auch die mit dem Schrumpfschlauch 24 versehenen Drahtenden 22a, 22b bedeckt. Es wird also im vorliegenden Ausführungsbeispiel über den gesamten Stator 10 hinweg eine durchgängige Beschichtung 50 ausgebildet, welche sämtliche Komponenten wirksam schützt und aufgrund ihrer Ausbildung als gemeinsame Beschichtung keine harten Absätze oder Übergänge ausbildet, an welchen abrasiv wirkende Partikel in der vorbeiströmenden Luft angreifen könnten.

Fig. 9 zeigt in einem zur Achse L senkrechten Schnitt den Verlauf der Beschichtung 50. Gut erkennbar aus Fig. 9 ist, dass die Beschichtung 50 im Bereich des Statorkörpers etwas dünner ausgebildet ist als im Bereich der Wickelköpfe 23a. Die dickere Beschichtung im Bereich der Wickelköpfe 23a ist insbesondere auch deswegen vorteilhaft, weil diese in der Regel am stärksten einem abrasiv wirkenden Partikelstrom in der Kühlluft ausgesetzt sind.

Der in den Figuren 8 und 9 gezeigte Stator 10 kann nachfolgend in ein Motorgehäuse (nicht gezeigt) eingesetzt werden.

## Patentansprüche

1. Stator (10) für einen Elektromotor, wobei der Stator (10) einen Statorkörper mit wenigstens zwei in einem Querschnitt betrachtet segmentförmigen Teilen (12) umfasst, die über Verbindungsstellen (18) miteinander verbindbar sind, wobei jedes Statorsegment (12) wenigstens zwei Verbindungsstellen (18) aufweist,
wobei die Statorsegmente (12) im verbundenen Zustand im Bereich der Verbindungsstellen (18) stoffschlüssig miteinander verbunden sind,
**dadurch gekennzeichnet, dass** der verbundene Statorkörper eine Beschichtung mit Träufelharz umfasst.

2. Stator (10) nach Anspruch 1,
**dadurch gekennzeichnet, dass** die Verbindungsstellen (18) sich entlang einer Längsachse (L) des Stators (10) erstrecken und dass jedes Statorsegment (12) eine erste Verbindungsstelle (18a) umfasst, welche zumindest abschnittsweise eine erste Kontur aufweist sowie eine zweite Verbindungsstelle (18b), welche zumindest abschnittsweise eine zweite zur ersten Kontur komplementäre Kontur aufweist, wobei die erste und die zwei Kontur in verbundenem Zustand eine Ausrichtung der verbundenen Statorsegmente (12) zueinander ermöglichen.

3. Stator (10) nach Anspruch 2,
**dadurch gekennzeichnet, dass** die erste Kontur eine längsverlaufende Nut und die zweite Kontur einen längsverlaufenden Vorsprung umfasst.

4. Stator (10) nach Anspruch 3,
**dadurch gekennzeichnet, dass** der längsverlaufende Vorsprung der ersten Kontur wenigstens zwei Kanten umfasst, die in einem Winkel aufeinandertreffen.

5. Stator (10) nach Anspruch 4,
**dadurch gekennzeichnet, dass** der Winkel in einem Bereich von 80 - 120 Winkelgrad liegt.

6. Elektromotor umfassend einen Stator (10) nach einem der Ansprüche 1 bis 5 sowie einen Rotor.

7. Verfahren zur Herstellung eines Stators (10) nach einem der Ansprüche 1 bis 5, umfassend die Schritte:
- Herstellen von wenigstens zwei im Querschnitt betrachtet segmentförmigen Teilen (12) des Statorkörpers;
- Einlegen von Draht (20) in Form von wenigstens einer Feldspule (20a) zwischen Polhörner (16) und Statorwand (12a) der jeweiligen Statorsegmente (12);
- Verbinden der Statorsegmente (12) zu einem Stator, wobei beim Verbinden der Statorsegmente (12), die Statorsegmente (12) im Bereich von Verbindungsstellen (18) aneinander angelegt werden und in einem weiteren Schritt die Statorsegmente (12) im Bereich der Verbindungsstellen (18) miteinander stoffschlüssig verbunden werden, beispielsweise mittels Schweißens, Klebens oder Lötens, **dadurch gekennzeichnet, dass** der Stator (10) durch Tauchimprägnierung beschichtet wird, wobei bevorzugt ein Träufelharz verwendet wird.

8. Verfahren nach Anspruch 7,
**dadurch gekennzeichnet, dass** der Schritt Einlegen von Draht (20) in Form von wenigstens einer Feldspule (20) die Unterschritte umfasst:
- Einlegen von Isolierpapier (30) in einen Spulenraum, wobei der Spulenraum eine Anzahl von Spulennuten (14) umfasst, die von Polhörnern (16) und Statorwand (12a) des Statorkörpers des Stators (10) begrenzt werden, und
- Einlegen von Draht (20) in Form von wenigstens einer Spule (20a) in den Spulenraum des Stators (10), wobei das Isolierpapier (30) in der Weise eingelegt wird, dass ein Abschnitt (32) davon aus der jeweiligen Spulennut (14) heraus in eine Richtung senkrecht zu der Längsachse (L) des Stators (10) über das jeweilige Polhorn (16) vorsteht.

9. Verfahren nach Anspruch 8,
**dadurch gekennzeichnet, dass** in einem Schritt das Isolierpapier (30) zumindest abschnittsweise an dem Statorkörper und/oder an dem eingelegten Spulendraht (20) fixiert wird.
